# EUROPEAN PATENT SPECIFICATION

(11) **EP 0 395 351 B1**
(45) Date of publication and mention of the grant of the patent: **27.01.1993**
(21) Application number: 90304379.2
(22) Date of filing: 24.04.1990
(51) Int. Cl.: B60Q 1/26

(54) **Beacon lamps**
Signalleuchte
Lampe de signalisation

(30) Priority: 28.04.1989 GB 8909825
(43) Date of publication of application: 31.10.1990
(73) Proprietor: LUCAS INDUSTRIES PUBLIC LIMITED COMPANY, Birmingham, B19 2XF (GB)
(72) Inventor: Beaumont, Derek Joseph, Handsworth Wood, Birmingham B20 1LA (GB)
(74) Representative: Carpenter, David

(56) References cited:
- DE-C- 432 552
- DE-C- 753 691
- GB-A- 1 560 309

## Description

This invention relates to beacon lamps, primarily but not exclusively intended for use on road vehicles, of the kind having a light source and a reflector for reflecting light from the source, the reflector being moved in use so that the appearance of a regularly flashing light is achieved (see also GB-A-1560309).

Beacon lamps of the kind specified above find extensive use in relation to police and other emergency vehicles wherein it is usual for the reflector and light source to be positioned within a coloured, usually blue or amber, light transmissive housing; the invention is not restricted to such usage, beacon lamps being used in many other environments.

Current regulations require that the illumination provided by the lamp achieves predetermined intensity values at predetermined angles of divergence both vertically and horizontally from the optical axis of the lamp reflector. Such criteria are difficult to achieve consistently with the conventional parabolic reflector formed as a metal pressing, the required accuracy of shaping of the reflector being susceptible to tool wear and mishandling of the metal pressing. Thus there is a desire to replace pressed metal reflectors with moulded synthetic resin reflectors since they would be far less susceptible to distortion through mishandling and the life expectancy of moulding tools should far exceed that of press tools in maintaining the required profile.

A further problem arising in relation to the conventional parabolic reflector is that the positioning of the light source, conveniently a high intensity electric bulb, at the focus of the reflector, and on the axis of movement of the reflector gives rise to the bulb base and mounting casting a shadow on the lower part of the reflector and thus diminishing the intensity of the lower portion of the beam of light produced by the reflector.

It is an object of the present invention to provide a beacon lamp, and a moulded synthetic resin reflector for a beacon lamp, wherein the aforementioned disadvantages are minimised.

In accordance with the present invention there is provided a beacon lamp including a light source, and a movable parabolic reflector for reflecting light from the light source, the parabolic reflector being formed as a synthetic resin moulding, and having a central reflective region which is defined by upper and lower curved reflector portions, one of the upper and lower curved reflector portions having its optical axis diverging downwardly from the optical axis of the parabolic region of the reflector, and the other of the upper and lower reflector portions having its optical axis diverging upwardly from the optical axis of the parabolic region of the reflector, the optical axes of the parabolic region and the upper and lower reflector portions lying in a common plane.

Preferably said upper and lower reflector portions have part paraboloidal reflecting surfaces.

Preferably the paraboloidal surface of the parabolic region of the reflector and the part paraboloidal surfaces of the upper and lower reflector portions have the same parameters.

Preferably the boundary of the upper and lower reflector region defines a circle having its centre on the optical axis of the parabolic region of the reflector.

Desirably said upper and lower reflector portions merge with one another and with the parabolic region along a line which is disposed horizontally in use.

The invention further resides in a reflector for use in a beacon lamp as specified above.

One example of the invention is illustrated in the accompanying drawings wherein,

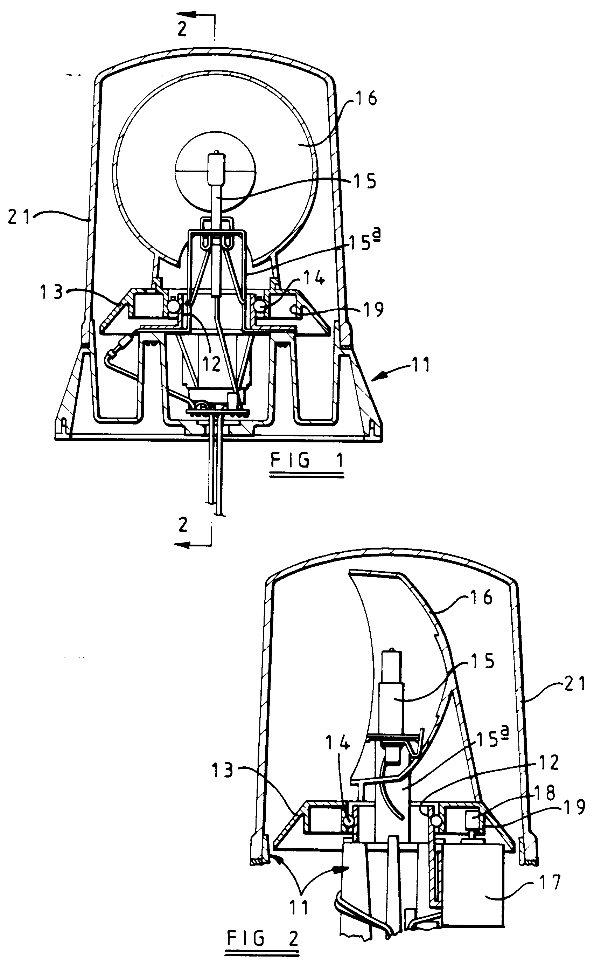

Figure 1 is a sectional view of a beacon lamp,
Figure 2 is a part sectional view on the line 2-2 in Figure 1, with part of the base thereof omitted,
Figure 3 is a front elevational view of the reflector of the beacon lamp of Figures 1 and 2,
Figure 4 is a sectional view on line 4-4 in Figure 3, and
Figures 5, 6 and 7 are views similar to Figure 4 of first, second and third alternatives.

Referring to the drawings the beacon lamp includes a moulded synthetic resin base 11 which is circular in transverse cross section and is arranged to be secured in any convenient manner to, for example the roof of a road vehicle. The base 11 includes a centrally disposed, annular support structure 12 encircled by a moulded synthetic resin reflector support 13. The support 13 is carried on the annular support structure 12 through a ball race 14 whereby the support 13 can rotate relative to the base 11 about the axis thereof. A high intensity electric light bulb 15, conveniently a quartz-halogen bulb is carried by a carrier 15a which is anchored to the base 11 and extends upwardly, centrally, through the annular structure 12. The bulb 15 is orientated so that its filament is positioned on the focus of a moulded synthetic resin, parabolic reflector 16 carried by the support 13. An electric motor 17 is carried by the structure 12 and has an output member 18 frictionally engaging a cylindrical surface 19 of the support 13 so that the motor 17 can drive the reflector 16 for rotation about the bulb 15.

The reflector 16 and bulb 15 are protected by a housing 21 in the form of a moulded synthetic resin dome the material of which is light transmissive and coloured to suit the application for which the beacon lamp is intended. The lower, open end of the dome 21 sealingly engages the base 11 to provide a weatherproof enclosure for the reflector, the bulb, and the associated components.

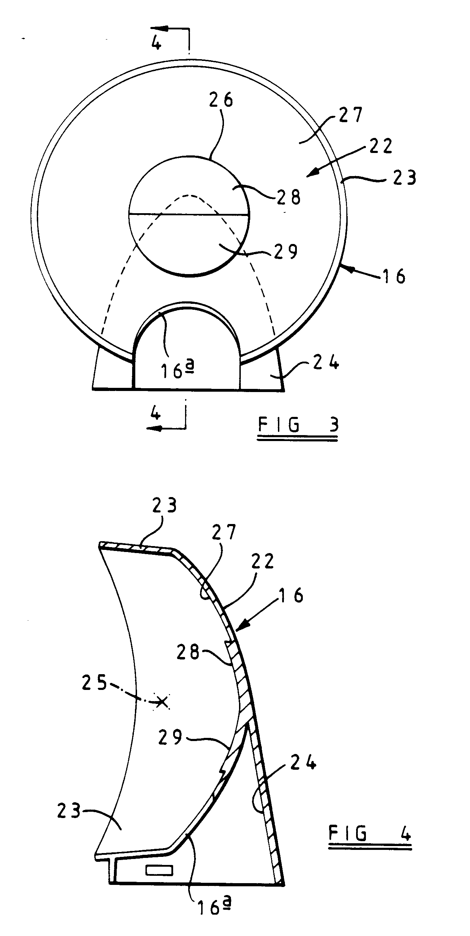

The details of the reflector 16 are best understood by reference to Figures 3 and 4 of the drawings from which it can be seen that the moulding constituting the reflector 16 comprises a dished member 22; a peripheral, substantially cylindrical shroud 23 integral with the edge of the member 22; and an integral mount 24 whereby the reflector 16 is secured to the support 13. During moulding the whole of the inner surface of the shroud 23 and dished member 22 is provided with a polished specular surface which is subsequently coated with aluminium to render it highly reflective. Reflection from the shroud 23 plays little or no part in formation of the beam of the beacon lamp, beam formation being primarily controlled by reflection from the dished member 22 which is a parabolic reflector having its focus indicated by an "X" at 25 in Figure 4.

It will be noted that the reflective surface of the dished member 22 is constituted by two distinct regions, a central region 26 and a peripheral region 27, the central region being seen as a circle in Figure 3. The peripheral region 27 is paraboloidal, and constitutes the principal beam forming region of the reflector. The region 27 is in fact a parabolic reflector. The central region 26 is divided into upper and lower portions 28, 29.

It will be recognised that if the reflector were a continuous parabolic reflector, that is to say ignoring the central region 26, and the light source was a point source at the focus 25 then the parabolic reflector would produce a parallel beam of light. However, the filament of the bulb 15 is not a true point source and thus the beam produced by reflection from the region 27 is slightly divergent, being sufficiently divergent to meet the requirements of illumination measured at a small angle to either side of a vertical plane containing the optical axis of the region 27 of the reflector. The divergence is not however sufficient to achieve the required illumination levels above and below a horizontal plane containing the optical axis of the reflector and the upper and lower portions 28 and 29 of the reflector 16 are designed to enhance the illumination in the required regions above and below the horizontal. The reflective surfaces of the portions 28 and 29 are in effect portions of the paraboloidal surface of the reflector 16 which have been tilted so that their optical axis is no longer coincident with the optical axis of the region 27 of the reflector. Thus the reflective surfaces of the portions 28, 29 are part paraboloidal, and may have exactly the same parameters as the paraboloidal surface of the region 27. The lower portion 29 is tilted with respect to the remainder of the reflector such that its optical axis diverges upwardly from the optical axis of the region 27 by a small amount. The upper region 28 is tilted so that its optical axis diverges downwardly from the optical axis of the region 27, the angle through which the region 28 is tilted being greater than that through which the region 29 is tilted so that in addition to providing the appropriate vertical divergence of the beam there is additional light reflected into the lower portion of the beam to overcome the loss of intensity in this portion of the beam which arises from shadowing of part of the reflector by the bulb support, and removal of part of the reflector (at 16a) to accommodate the bulb and its mounting arrangement.

The portions 28, 29 merge with one another at a line which is disposed horizontally in use and may be a continuation of the curve of the main reflector portion 27. It will be recognised that the relative dimensions of the regions 26 and 27, and the inclination of the portions 28 and 29 is determined in accordance with the criteria which the reflector must fulfil. Thus for criteria different to those mentioned above different dimensions and inclinations will be chosen.

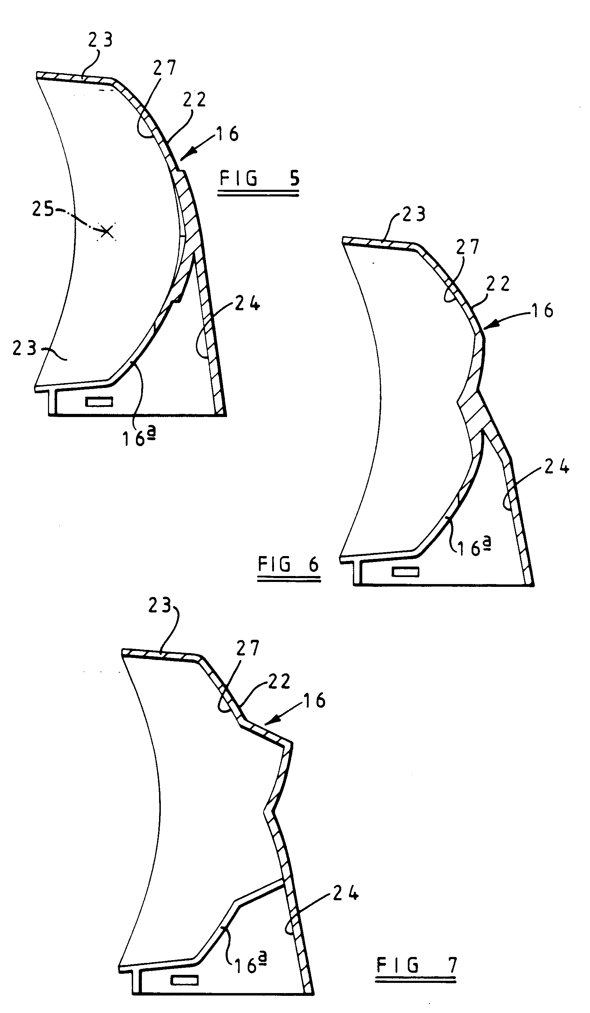

The reflector 16 of Figure 5 differs from that of Figure 4 in that the central region 26 has been displaced bodily rearwardly along the optical axis of the principal region 27 of the reflector, by an amount such that the uppermost and lowermost points of the central region are flush with the region 27 rather than the ends of the junction line of the portions 28, 29 being flush with the region 27 as is the case with the Figure 4 construction.

In Figures 4 and 5 the upper portion 28 of the central region 26 is inclined downwardly and the lower portion 29 is inclined upwardly. Figures 6 and 7 show two alternative arrangements in which the upper portion 28 is inclined upwardly and the lower portion 29 is inclined downwardly. Optically there is no significant performance difference between the arrangements shown in Figures 4 to 7.

In Figure 6 the downwardly inclined lower portion 29 and the upwardly inclined upper portion 28 merge, without a significant step, into the region 27 at their lowest and highest points respectively and thus the region 26 projects into the volume bounded by the principal reflector region 27. In the Figure 7 arrangement the central region 26 has been displaced rearwardly by comparison with Figure 6 so that the ends of the horizontal junction line of the portions 28 and 29 merges, with no significant step, into the region 27.

When conducting experiments to try to produce a moulded reflector which would, in a simple and convenient form, meet the imposed criteria it was noted that reflection from the central region of a simple parabolic reflector did not contribute to beam shaping, and removal of the centre section changed only the intensity of the beam produced. In order to determine the size, and more particularly, the inclination needed in the portions 28 and 29. The intensity and divergence of a beam produced by a reflector consisting solely of the portion 27 was first measured, and then the intensity derived from portions 28 and 29 taken individually, and separately from the region 27 was measured. The measurements taken enabled the determination of the necessary inclination of the portions 28 and 29 in order to achieve the desired intensity of illumination at the desired divergence above and below the optical axis.

A convenient material for the manufacture of the reflector 16 is PBT CRASTINE XMB 1055 (20% MF) available from the firm of Ciba-Geigy; alternative materials include those in the class of synthetic resin materials known as "polyarylates".

## Claims

1. A beacon lamp including a light source (15), and a movable parabolic reflector (16) for reflecting light from the light source (15) characterised in that, the parabolic reflector (16) is formed as a synthetic resin moulding, and has a central reflective region (26) which is defined by upper and lower curved reflector portions (28, 29), one of the upper and lower curved reflector portions (28, 29) having its optical axis diverging downwardly from the optical axis of the parabolic region (27) of the reflector (16), and the other of the upper and lower reflector portions (28, 29) having its optical axis diverging upwardly from the optical axis of the parabolic region (27) of the reflector (16), the optical axes of the parabolic region (27) and the upper and lower reflector portions (28, 29) lying in a common plane.

2. A beacon lamp as claimed in Claim 1 characterised in that said upper and lower reflector portions (28, 29) have part paraboloidal reflecting surfaces.

3. A beacon lamp as claimed in Claim 2 characterised in that the paraboloidal surface of the parabolic region (27) of the reflector (16) and the part paraboloidal surfaces of the upper and lower reflector portions (28, 29) have the same parameters.

4. A beacon lamp as claimed in any one of Claims 1 to 3 characterised in that the boundary of the upper and lower reflector portions (28, 29) defines a circle having its centre on the optical axis of the parabolic region (27) of the reflector (16).

5. A beacon lamp as claimed in any one of Claims 1 to 4 characterised in that said upper and lower reflector portions (28, 29) merge with one another and with the parabolic region (27) along a line which is disposed horizontally in use.

6. A reflector for use in a beacon lamp characterised by being formed as a synthetic resin moulding, and having a central reflective region (26) which is defined by upper and lower curved reflector portions (28, 29), one of the upper and lower curved reflector portions (28, 29) having its optical axis diverging downwardly from the optical axis of the parabolic region (27) of the reflector (16), and the other of the upper and lower reflector portion (28, 29) having its optical axis diverging upwardly from the optical axis of the parabolic region (27) of the reflector (16), the optical axes of the parabolic region (27) and the upper and lower reflector portions (28, 29) lying in a common plane.

7. A reflector as claimed in Claim 6 characterised in that said upper and lower reflector portions (28, 29) have part paraboloidal reflecting surfaces.

8. A reflector as claimed in Claim 7 characterised in that the paraboloidal surface of the parabolic region (27) of the reflector (16) and the part paraboloidal surfaces of the upper and lower reflector portions (28, 29) have the same parameters.

9. A reflector as claimed in any one of Claims 6 to 8 characterised in that the boundary of the upper and lower reflector portions (28, 29) defines a circle having its centre on the optical axis of the parabolic region (27) of the reflector (16).

10. A reflector as claimed in any one of Claims 6 to 9 characterised in that said upper and lower reflector portions (28, 29) merge with one another and with the parabolic region (27) along a line which is disposed horizontally in use.

## Patentansprüche

1. Signalleuchte mit einer Lichtquelle (15) und einem bewegbaren Parabolreflektor (16) zum Reflektieren von Licht von der Lichtquelle (15) dadurch gekennzeichnet, daß der Parabolreflektor (16) als ein synthetischer Harzguß gebildet ist und einen zentralen reflektierenden Bereich (26, der durch einen oberen und einen unteren gekrümmten Reflektorabschnitt 28, 29 definiert ist, wobei einer des oberen und unteren Reflektorabschnittes (28, 29) eine abwärts von der optischen Achse des Parabolbereiches (27) des Reflektors (26) abweichende optische Achse aufweist und der andere des oberen und unteren Reflektorabschnittes (28, 29) eine aufwärts von der optischen Achse des Parabolbereiches (27) des Reflektors (26) abweichende optische Achse aufweist, wobei die optischen Achsen des parabolischen Bereiches (27) und des oberen und unteren Reflektorabschnittes (28, 29) in einer gemeinsamen Ebene liegen.

2. Signalleuchte nach Anspruch 1, dadurch gekennzeichnet, daß der obere und untere Reflektorabschnitt (28, 29) parabolförmige reflektierende Teiloberflächen aufweisen.

3. Signalleuchte nach Anspruch 2, dadurch gekennzeichnet, daß die Paraboloberfläche des Parabolbereiches (27) des Reflektors (16) und die parabolförmigen Teiloberflächen des oberen und unteren Reflektorabschnittes (28, 29) die gleichen Parameter aufweisen.

4. Signalleuchte nach einem der Ansprüche 1-3, dadurch gekennzeichnet, daß die Grenze des oberen und unteren Reflektorabschnittes (28, 29) einen Kreis definiert, dessen Mitte auf der optischen Achse des Parabolbereiches (27) des Reflektors (16) liegt.

5. Signalleuchte nach einem der Ansprüche 1-4, dadurch gekennzeicht, daß der obere und untere Reflektorabschnitt (28, 29) miteinander und mit dem Parabolbereich (27) sich entlang einer Linie verschmelzen, die im Gebrauch horizontal vorgesehen ist.

6. Reflektor zur Benutzung in einer Signalleuchte, dadurch gekennzeichnet, daß er aus einem synthetischen Harzguß gebildet ist und eine zentralen reflektierenden Bereich (26) aufweist, der durch einen oberen und unteren gekrümmten Reflektorabschnitt (28, 29) definiert ist, daß einer des oberen und unteren gekrümmten Reflektorabschnittes (28, 29) eine abwärts von der optischen Achse des Parabolbereiches (27) des Reflektors (16) abweichende optische Achse aufweist und der andere des oberen und unteren Reflektorabschnittes (28, 29) eine aufwärts von der optischen Achse des Parabolbereiches (27) des Reflektors (16) abweichende optische Achse aufweist und daß die optischen Achsen des Parabolbereiches (27) und des oberen und unteren Reflektorabschnittes (28, 29) in einer gemeinsamen Ebene liegen.

7. Reflektor nach Anspruch 6, dadurch gekennzeichnet, daß der obere und untere Reflektorabschnitt (28, 29) parabolförmige reflektierende Teiloberflächen aufweisen.

8. Reflektor nach Anspruch 7, dadurch gekennzeichnet, daß die Paraboloberfläche des Parabolbereiches (27) des Reflektors (16) und die parabolförmigen Teiloberflächen des obere und untere Reflektorabschnittes (28, 29) die gleichen Parameter aufweisen.

9. Reflektor nach einem der Ansprüche 6-8, dadurch gekennzeichnet, daß die Grenze des oberen und unteren Reflektorabschnittes (28, 29) einen Kreis definiert, dessen Mittelpunkt auf der optischen Achse des Parabolbereiches (27) des Reflektors (16) liegt.

10. Reflektor nach einem der Ansprüche 6-9, dadurch gekennzeichnet, daß der obere und untere Reflektorabschnitt (28, 29) miteinander und mit dem Parabolbereich (27) entlang einer Linie verschmelzen, die in der Benutzung horizontal vorgesehen ist.

## Revendications

1. Gyrophare englobant une source lumineuse (15) et un réflecteur parabolique mobile (16) pour réfléchir la lumière provenant de la source lumineuse (15), caractérisé en ce que le réflecteur parabolique (16) est façonné en un moulage en résine synthétique et possède une région réfléchissante centrale (26) qui est définie par des portions de réflecteur courbes supérieure et inférieure (28, 29), l'axe optique de l'une des portions de réflecteur courbes supérieure et inférieure (28, 29) divergeant vers le bas par rapport à l'axe optique de la région parabolique (27) du réflecteur (16) et l'axe optique de l'autre des portions de réflecteur supérieure et inférieure (28, 29) divergeant vers le haut par rapport à l'axe optique de la région parabolique (27) du réflecteur (16), les axes optiques de la région parabolique (27) et des portions de réflecteur supérieure et inférieure (28, 29) se trouvant dans un plan commun.

2. Gyrophare selon la revendication 1, caractérisé en ce que lesdites portions de réflecteur supérieure et inférieure (28, 29) possèdent des surfaces réfléchissantes partiellement paraboloïdales.

3. Gyrophare selon la revendication 2, caractérisé en ce que la surface paraboloïdale de la région parabolique (27) du réflecteur (16) et les surfaces partiellement paraboloïdales des portions de réflecteur supérieure et inférieure (28, 29) ont les mêmes paramètres.

4. Gyrophare selon l'une quelconque des revendications 1 à 3, caractérisé en ce que la limite entre les portions de réflecteur supérieure et inférieure (28, 29) définit un cercle dont le centre se situe sur l'axe optique de la région parabolique (27) du réflecteur (16).

5. Gyrophare selon l'une quelconque des revendications 1 à 4, caractérisé en ce que lesdites portions de réflecteur supérieure et inférieure (28, 29) fusionnent mutuellement et avec la région parabolique (27) le long d'une ligne disposée horizontalement, lors de la mise en service.

6. Réflecteur destiné à être utilisé dans un gyrophare, caractérisé par le fait qu'il est façonné en un moulage en résine synthétique et qu'il possède une région réfléchissante centrale (26) qui est définie par des portions de réflecteur courbes supérieure et inférieure (28, 29), l'axe optique de l'une des portions de réflecteur courbes supérieure et inférieure (28, 29) divergeant vers le bas par rapport à l'axe optique de la région parabolique (27) du réflecteur (16) et l'axe optique de l'autre des portions de réflecteur supérieure et inférieure (28, 29) divergeant vers le haut par rapport à l'axe optique de la région parabolique (27) du réflecteur (16), les axes optiques de la région parabolique (27) et des portions de réflecteur supérieure et inférieure (28, 29) se trouvant dans un plan commun.

7. Réflecteur selon la revendication 6, caractérisé en ce que lesdites portions de réflecteur supérieure et inférieure (28, 29) possèdent des surfaces réfléchissantes partiellement paraboloïdales.

8. Réflecteur selon la revendication 7, caractérisé en ce que la surface paraboloïdale de la région parabolique (27) du réflecteur (16) et les surfaces partiellement paraboloïdales des portions de réflecteur supérieure et inférieure (28, 29) ont les mêmes paramètres.

9. Réflecteur selon l'une quelconque des revendications 6 à 8, caractérisé en ce que la limite entre les portions de réflecteur supérieure et inférieure (28, 29) définit un cercle dont le centre se situe sur l'axe optique de la région parabolique (27) du réflecteur (16).

10. Réflecteur selon l'une quelconque des revendications 6 à 9, caractérisé en ce que lesdites portions de réflecteur supérieure et inférieure (28, 29) fusionnent mutuellement et avec la région parabolique (27) le long d'une ligne disposée horizontalement, lors de la mise en service.
